# EUROPEAN PATENT SPECIFICATION

(11) **EP 0 460 347 B1**
(45) Date of publication and mention of the grant of the patent: **15.05.1996**
(21) Application number: 91100476.0
(22) Date of filing: 16.01.1991
(51) Int. Cl.: G11B 7/26, G11B 7/24, G11B 7/00

(54) **Optical disk and its manufacturing method**
Optische Platte und Verfahren zu ihrer Herstellung
Disque optique et sa méthode de fabrication

(30) Priority: 04.06.1990 JP 145916/90
(43) Date of publication of application: 11.12.1991
(73) Proprietor: PIONEER ELECTRONIC CORPORATION, Meguro-ku Tokyo 153 (JP)
(72) Inventor: Chikuma, Kiyofumi, c/o Pioneer Elec. Corp., Iruma-gun, Saitama 350-02 (JP); Takei, Kiyoshi, c/o Pioneer Elec. Corp., Iruma-gun, Saitama 350-02 (JP)
(74) Representative: Finsterwald, Manfred, Dipl.-Ing., Dipl.-Wirtsch.-Ing.

(56) References cited:
- EP-A- 239 188
- EP-A- 0 354 601
- JP-A-63 133 332
- PATENT ABSTRACTS OF JAPAN vol. 12, no. 388 (P-771) 17 October 1988, & JP-A- 63 131344 (CANON INC) 03 June 1988,
- PATENT ABSTRACTS OF JAPAN vol. 12, no. 286 (M-727) 05 August 1988, & JP-A- 63 062791 (CANON INC) 19 March 1988,
- PATENT ABSTRACTS OF JAPAN vol. 13, no. 311 (M-851) 17 July 1989, & JP-A- 01 101191 (CANON INC) 19 April 1989,
- PATENT ABSTRACTS OF JAPAN vol. 12, no. 388 (P-771) 17 October 1988, & JP-A- 63 131343 (CANON INC) 03 June 1988,

## Description

### Field of the Invention

The present invention relates to an optical information recording disk according to the preamble of claim 1 and to a method of manufacturing an optical disk according to the preamble of claim 5.

### Description of the Related Art

On an optical information recording medium, e.g., an optical disk, such as a compact disk (CD) or a video disk, information is recorded as the presence/absence (arrangement) of minute pits on tracks. In reproducing the information, an optical pickup, which traces on the tracks, detects a change in reflection light of a laser beam emitted on the pits as an electric signal.

Such optical disk have been manufactured as follows. First, a photoresist is coated on a glass master disk, and minute laser beam spots are then emitted on the master disk to deform those beam-hit regions of the photoresist by means of a cutting machine. The optically deformed regions are discretely formed in accordance with information signals. After the master disk has undergone a developing process, only the optically deformed regions are removed from the top of the master disk, leaving minute pits formed thereon. This master disk is subjected to nickel plating, then to electroforming to grow the nickel metal layer, thus forming a stamper. Using the stamper, information pits are transferred onto a transparent resin by an injection device, yielding a substrate. Metal, such as aluminum, is vapor-deposited on the substrate to form a reflection layer, and the resultant structure becomes an optical disk, such as CD.

According to the conventional information recording/reproducing system using such optical disks, the resolution of detectable information (sizes of pits or regions) is limited by the maximum spatial frequency of 2NA/λ in light of the frequency characteristic, where NA is the number of apertures of the lens of the reproducing optical system and λ is the wavelength of light used to detect recorded information. Since the practical, maximum spatial frequency of reproducible recorded information is approximately 1.0 to 1.5 times NA/λ, the high density of an optical disk is also limited.

Although various types of high-density optical disks have been developed, practical methods of manufacturing such high-density optical disks have not yet sufficiently been developed.

From document JP-A-63133332 an optical information recording carrier is known comprising a reflective layer covered by a resist with a plurality of recesses in which a fluorescent dye or pigment is filled.

From document EP-A-239188 a preformatted optical recording medium and a method of producing the same are known. The medium comprises an optical reflective film which can be made of aluminum and having a pattern of pits in the form of through holes, and an optical recording film placed subsequently on a base plate.

### SUMMARY OF THE INVENTION

It is therefore an object of the present invention to provide such an optical disk which can ensure information recording/reproduction at high density and a simple method of manufacturing such a disk.

This object is achieved by an optical information recording disk comprising the features of the charcterising part of claim 1 and by a method comprising the features of the characterising part of claim 5. The preamble of claim 1 is based on EP-A-239198.

### BRIEF DESCRIPTION OF THE DRAWINGS

Fig. 1 is a cross section of one embodiment of an optical disk according to the present invention; and
Fig. 2 presents cross sections of individual elements of an optical disk in individual steps illustrating one embodiment of an optical disk manufacturing method according to the present invention

### DETAILED DESCRIPTION OF THE PREFERRED EMBODIMENT

A preferred embodiment of the present invention will now be described referring to the accompanying drawings.

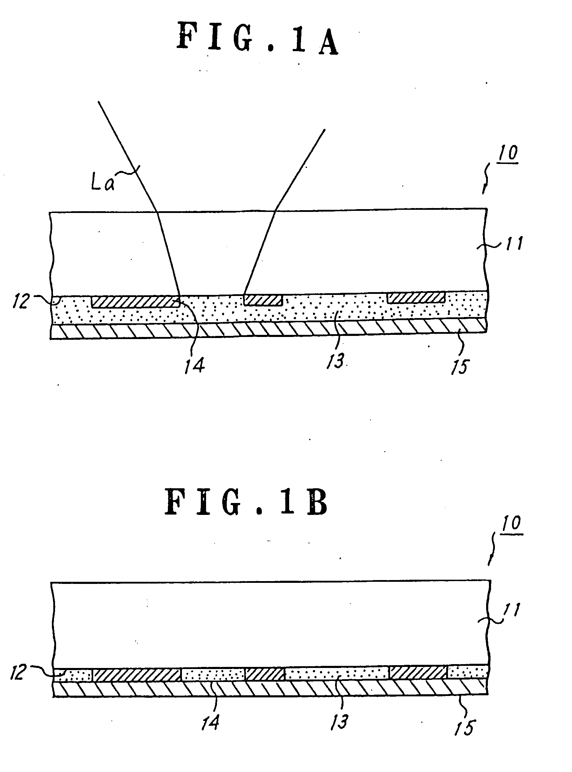

Fig. 1A presents a cross section illustrating one embodiment of an optical information recording medium according to the present invention. Referring to this diagram, a transparent substrate 11 comprises a transparent glass disk, and has a reflection layer 14 formed on one flat main surface, with tracks of minute through holes 12 formed on the reflection layer 14 in spiral form or concentrically, for example. The through holes 12 on the substrate 11 are filled with a light-emitting member, which is sensitive to light irradiated from the other main surface side of the substrate 11 to emit light of a wavelength different from that of the irradiated light, forming light-emitting regions. In other words, a light-emitting layer 13 extending continuously from the light-emitting member is formed outside the reflection layer 14. The light-emitting member may be a photoluminescent material, fluorescent chromatophore or fluorescent member. The reflection layer 14 reflects light irradiated from the other main surface side of the substrate 11, and the through holes 12 pass light emitted from the light-emitting regions 13. A protective layer 15 is formed on the light-emitting layer 13. A laser beam La is irradiated from the side of the substrate 11. The substrate 11 of a recording medium 10 with the above structure may be a disk of a transparent resin, such as an acrylic resin or polycarbonate, copied from, for example, a stamper prepared in the mastering step for a conventional optical disk, besides the glass disk. The through holes 12 therefore correspond to the pits on the conventional optical disk. In other words, information is recorded as the arrangement of island-shaped light-emitting regions 13 defined in the through holes 12.

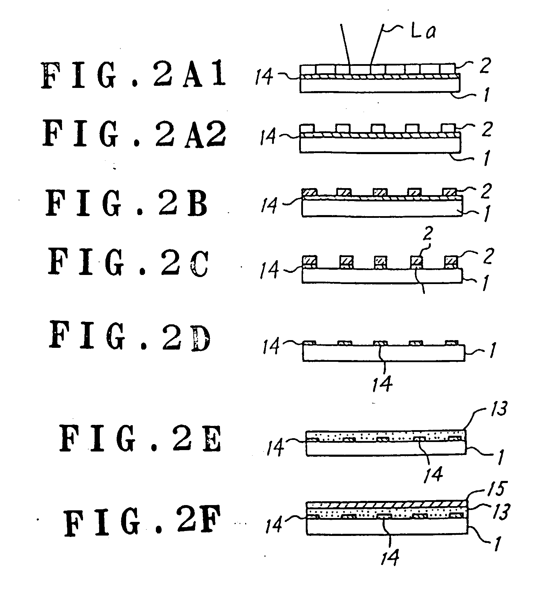

The above optical disk 10 is manufactured through the following steps. First, a photoresist master disk having an aluminum reflection layer 14 and a photoresist layer 2 formed uniformly in this order on the main surface of the glass disk 1 to be a substrate is prepared, as shown in Fig. 2A1, and latent image in tracks of spots corresponding to given information are formed in spiral form or concentrically on the photoresist layer 2 using the laser beam La in a laser cutting step.

Then, in a developing step, the exposed photoresist master disk is set in a developing device and developed to provide tracks of minute upheavals (hereinafter referred to as pits) corresponding to signals to be recorded, on the photoresist master disk. This yields a developing master disk comprising the glass disk 1 and the pits-formed photoresist layer 2 as an information recording layer, as shown in Fig. 2A2.

In the next post-baking step, the photoresist layer 2 of the developing master disk is dried to be fixed on the reflection layer 14, providing a dry master disk as shown in Fig. 2B.

In an etching step, the dry master disk is attached to an etching device, and is soaked in an etching liquid to corrode those portions of the reflection layer 14 which correspond to the pits. Thus, tracks of through holes 12 or pits corresponding to recording signals are formed in the reflection layer 14, yielding a disk as shown in Fig. 2C. With the photoresist layer 2 removed, a reflection layer base disk including the glass disk 1 and the through-holes formed reflection layer 14, which is an information recording layer, is obtained as shown in Fig. 2D.

In the next light-emitting layer forming step, the base disk of the reflection layer having the through holes 12 is attached to a spin coating device. A fluorescent liquid, which has a fluorescent member carried in the proper transparent resin solvent, is uniformly coated on the reflection layer 14, and is dried, thus forming the light-emitting layer 11 including the fluorescent member on the reflection layer 14. As a result, the base disk as shown in Fig. 2E is obtained.

The protective layer 15 is formed on the light-emitting layer 11 consisting of the fluorescent member by a wellknown method, thus yielding an optical disk shown in Fig. 2F.

The light-emitting layer 13 consisting of the fluorescent member should not necessarily cover the entire reflection layer 14 including the through holes 12 as shown in Fig. 1A. The light-emitting layer 11 may have the same thickness as the reflection layer 14, so that the layer 13 can be formed only in the through holes 12, as shown in Fig. 1B. Although the light-emitting layer 11 comprising the fluorescent member and the protective layer 15 closely contact each other on the illustrated optical disk, if another reflection layer (not shown) is formed between the light-emitting layer 11 comprising the fluorescent member and the protective layer 15, the amount of reflection light and the amount of fluorescent light can be increased.

As the pits are filled with the light-emitting material in the above manner, the spatial frequency up to 2NA(1/λ 1+1/λ 2) can be picked up using a special pickup in the apparatus as disclosed in Published Unexamined Japanese Patent No. Hei 2-50328 applied by the present applicant, where NA is the number of apertures of the objective lens for reading information, λ 1 is the wavelength of light to be irradiated, and λ 2 is the wavelength of light to be emitted from the light-emitting material in response to the irradiated light. Accordingly, the optical disk having the above structure can record information of a spatial frequency up to approximately twice the amount possible in the prior art, thus ensuring high-density recording on an optical disk.

As described above, according to the present invention, a method of manufacturing an optical disk on which light-emitting regions for absorbing a laser beam and emitting light of a wavelength different from that of the laser beam and reflection regions for reflecting a laser beam irradiated thereon are alternately arranged, comprises the steps of forming a reflection layer on a transparent substrate, forming a plurality of through holes in the reflection layer, and filling a light-emitting layer consisting of a fluorescent member in the through holes. It is therefore possible to easily manufacture optical disks which can ensure recording/reproduction of information at high density.

## Claims

1. An optical information recording disk comprising:
a transparent substrate (11);
a reflection layer (14) formed on one flat main surface of said substrate (11),
a track of a plurality of minute through holes (12) formed in the reflection layer (14); and **characterized** by
a light-emitting member (13) with which said through holes (12) are filled, said light-emitting member (13) absorbing a laser beam (La) and emitting a light of a wavelength different from that of the irradiated laser beam (La).

2. An optical information recording disk according to claim 1, wherein said light-emitting member (13) is a photoluminescent material, fluorescent chromatophore or fluorescent member.

3. An optical information recording disk according to claim 1, wherein said substrate (11) is formed of transparent resin such as an acrylic resin or polycarbonate, or glass.

4. An optical information recording disk according to claim 1, further comprising a protective layer (15) formed on said light-emitting member (13).

5. A method of manufacturing an optical information recording disk on which light-emitting regions (13) for absorbing a laser beam (La) and emitting light of a wavelength different from that of the laser beam (La) and reflection regions (14) for reflecting a laser beam (La) irradiated thereon are alternately arranged, the method comprising the step of:
forming a reflection layer (14) on a transparent substrate (11);
forming a plurality of through holes (12) in the reflection layer (14); and
filling a light-emitting member (13) in the through holes (12).

6. A method of manufacturing an optical information recording medium according to claim 5, further comprising a step of forming a protective layer (15) on said light-emitting member (13).

## Patentansprüche

1. Optische Informationsaufzeichnungsplatte, die umfaßt: ein transparentes Substrat (11);
eine Reflektionsschicht (14), die auf der ebenen Hauptoberfläche des Substrats (11) gebildet ist,
eine Spur einer Vielzahl von winzigen Durchgangslöchern (12), die in der Reflektionsschicht (14) gebildet sind;
und gekennzeichnet durch
ein lichtemittierendes Teil (13), mit dem die Durchgangslöcher (12) gefüllt sind, wobei dieses lichtemittierende Teil (13) ein Laserbündel (La) absorbiert und Licht einer Wellenlänge unterschiedlich von der des eingestrahlten Laserlichtes (La) emittiert.

2. Optische Informationsaufzeichnungsplatte gemäß Anspruch 1, wobei das lichtemittierende Teil (13) ein fotolumineszierendes Material, ein fluoreszierender Farbträger oder ein fluoreszierendes Teil ist.

3. Optische Informationsaufzeichnungsplatte nach Anspruch 1, wobei das Substrat (11) aus einem transparenten Harz wie beispielsweise einem Acrylharz oder Polykarbonat, oder Glas gebildet ist.

4. Optische Informationsaufzeichnungsplatte nach Anspruch 1, die ferner eine Schutzschicht (15), die auf dem lichtemittierenden Teil (13) gebildet ist, umfaßt.

5. Verfahren zur Herstellung einer optischen Informationsaufzeichnungsplatte, auf der lichtemittierende Bereiche (13) zur Absorbtion eines Laserbündels (La) und zur Aussendung von Licht einer Wellenlänge, die unterschiedlich von der des Laserbündels (La) ist, und Reflektionsbereiche (14) zur Reflektion eines darauf eingestrahlten Laserbündels (La) alternierend angeordnet sind, wobei das Verfahren den Schritt umfaßt:
der Bildung einer Reflektionsschicht (14) auf einem transparenten Substrat (11);
der Bildung einer Vielzahl von Durchgangslöchern (12) in der Reflektionsschicht (14); und
dem Füllen eines lichtemittierenden Teils (13) in die Durchgangslöcher (12).

6. Verfahren zur Herstellung eines optischen Informationsaufzeichnungsmediums gemäß Anspruch 5, das ferner einen Schritt der Bild einer Schutzschicht (15) auf dem lichtemittierenden Teil (13) umfaßt.

## Revendications

1. Disque optique pour enregistrer des informations, comprenant :
un substrat transparent (11) ;
une couche de réflexion (14) formée sur l'une des surfaces planes principales dudit substrat (11) ; et
une piste de minuscules trous passants (12) formés dans la couche de réflexion (14),
caractérisé par :
un organe luminescent (13) qui remplit ces trous passants (12), ledit organe luminescent (13) absorbant un rayon laser (La) et émettant une lumière dont la longueur d'onde est différente de celle du rayon laser (La) émis.

2. Disque optique pour enregistrer des informations selon la revendication 1, dans lequel ledit organe luminescent (13) est une matière photoluminescente, un chromatophore fluorescent ou un organe fluorescent.

3. Disque optique pour enregistrer des informations selon la revendication 1, dans lequel ledit substrat (11) est formé par une résine transparente telle qu'une résine acrylique, du polycarbonate ou du verre.

4. Disque optique pour enregistrer des informations selon la revendication 1, comprenant en outre une couche protectrice (15) formée sur ledit organe luminescent (13).

5. Procédé de réalisation d'un disque optique pour enregistrer des informations, sur lequel sont disposées en alternance des régions luminescentes (13) qui absorbent un rayon laser (La) et émettent une lumière dont la longueur d'onde est différente de celle du rayon laser (La), et des régions de réflexion (14) qui réfléchissent un rayon laser (La) qui y est projeté, le procédé comprenant les étapes de :
formation d'une couche de réflexion (14) sur le substrat transparent (11) ;
formation d'une pluralité de trous passants (12) dans la couche de réflexion (14) ; et
remplissage des trous passants (12) avec un organe luminescent (13).

6. Procédé de réalisation d'un moyen optique pour enregistrer des informations selon la revendication 5, ce procédé comprenant en outre une étape de formation d'une couche protectrice (15) sur ledit organe luminescent (13).
